Europäisches Patentamt

European Patent Office

Office européen des brevets

(19)

(11) **EP 0 756 190 B1**

(12) **EUROPEAN PATENT SPECIFICATION**

(45) Date of publication and mention
of the grant of the patent:
**23.06.2004 Bulletin 2004/26**

(21) Application number: **96900426.6**

(22) Date of filing: **10.01.1996**

(51) Int Cl.⁷: **G09G 3/36**, G02F 1/133

(86) International application number:
**PCT/JP1996/000023**

(87) International publication number:
**WO 1996/021879 (18.07.1996 Gazette 1996/33)**

(54) **POWER SUPPLY CIRCUIT, POWER SUPPLY FOR LIQUID CRYSTAL DISPLAY, AND LIQUID CRYSTAL DISPLAY**

STROMVERSORGUNGSSCHALTUNG, STROMVERSORGUNG FÜR
FLÜSSIGKRISTALLANZEIGEVORRICHTUNG UND FLÜSSIGKRISTALLANZEIGEVORRICHTUNG

CIRCUIT D'ALIMENTATION, ALIMENTATION POUR ECRAN A CRISTAUX LIQUIDES ET ECRAN
A CRISTAUX LIQUIDES

(84) Designated Contracting States:
**DE FR GB NL**

(30) Priority: **13.01.1995 JP 448095**

(43) Date of publication of application:
**29.01.1997 Bulletin 1997/05**

(73) Proprietor: **SEIKO EPSON CORPORATION**
**Shinjuku-ku, Tokyo 163-0811 (JP)**

(72) Inventor: **YATABE, Satoshi,**
**Seiko Epson Corporation**
**Suwa-shi, Nagano-ken 392 (JP)**

(74) Representative: **Hoffmann, Eckart, Dipl.-Ing.**
**Patentanwalt,**
**Bahnhofstrasse 103**
**82166 Gräfelfing (DE)**

(56) References cited:
**DE-U- 9 115 126          JP-A- 3 230 116**
**JP-A- 3 230 117          JP-A- 3 230 188**
**JP-A- 4 294 325**

- **ELECTRONIC DESIGN, vol. 38, no. 24, 27 December 1990, HASBROUCK HEIGHTS, NEW JERSEY US, page 63 XP000178363 NAGARAJ M S: "OP AMP REGULATES ITS OWN SUPPLY"**
- **PATENT ABSTRACTS OF JAPAN vol. 014, no. 398 (P-1097), 28 August 1990 & JP 02 150819 A (SEIKO EPSON CORP), 11 June 1990,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a power supply circuit, a power supply for driving a liquid crystal display, and a liquid crystal display device, and more particularly, to a new structure for a multiple output power supply circuit which can supply a plurality of suitable electric potentials as a power supply for driving the liquid crystal panel in a liquid crystal display device.

2. Description of Related Art

Conventionally, power supply circuits which supply a plurality of electric potentials have been used for the driving circuit in liquid crystal panels, and one example of these power supply circuits is disclosed in JP-A-2-150819. Fig. 10 shows the basic structure of this conventional power supply circuit. In the liquid crystal panel 1, a plurality of parallel segment electrodes SE1, SE2, ..., (hereafter abbreviated as SEn) which extend in stripe form, and a plurality of parallel common electrodes CE1, CE2, ... (hereafter abbreviated as CEn) which extend in a direction orthogonal to the segment electrodes, are provided in a state facing each other with a liquid crystal layer (not shown) interposed in between. The areas of the liquid crystal layer where these segment electrodes SEn and the common electrodes CEn cross comprise pixels, the optical state of which can change and which can be controlled to be dark or bright, and through the plurality of pixels, a desired display state can be reproduced over the liquid crystal panel as a whole.

For displaying a desired picture image on the liquid crystal panel 1, specific electric potentials are applied for a specific length of time by a liquid crystal driving circuit in order to form the pixel states corresponding to the picture image on the segment electrodes SEn and the common electrodes CEn; and through a so-called time division driving, the state of each pixel is controlled, said pixels having a structure which is equivalent to a condenser with the liquid crystal layer interposed between the electrodes.

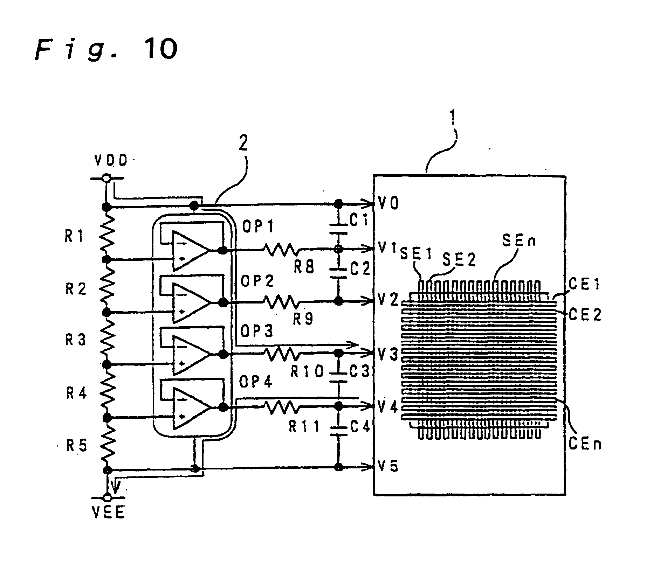

The circuit shown in Fig. 10 is a multiple output power supply circuit which is used to supply the electric potentials V0, V1, V2, V3, V4 and V5 to the driving circuit of the liquid crystal panel 1. In this circuit, first, using the high electric potential VDD, which is the power source electric potential that is supplied from the power source, and the low electric potential VEE as a base, the voltage is divided by voltage dividing resistors R1, R2, R3, R4 and R5, to form intermediate electric potentials V1, V2, V3 and V4. These intermediate electric potentials V1, V2, V3 and V4 are input into the non-inverting input terminals of operational amplifiers OP1, OP2, OP3 and OP4 which are formed in integrated circuit 2. These operational amplifiers OP1, OP2, OP3 and OP4 are composed as voltage followers with the output terminals and inverting input terminals short-circuited, and can supply the intermediate electric potentials V1, V2, V3 and V4 with low output impedance.

The outputs of the operational amplifiers OP1, OP2, OP3 and OP4 are connected to resistors R8, R9, R10 and R11, respectively, and the resistors R8 through R11 restrict the output current of the operational amplifiers OP1 through OP4, respectively. In addition, after these resistors, the top three electric potentials, out of the six electric potentials including the power source electric potential VDD and VEE, and the bottom three electric potentials are connected by condensers C1, C2, C3 and C4 between the respective electric potentials.

From the power supply circuit thus formed, six output electric potentials V0 to V5 are output, with the power source electric potentials VDD as V0 and VEE as V5. These output electric potentials V0 through V5 are applied to the respective segment electrodes SEn and common electrodes CEn through the liquid crystal driving circuit which acts in accordance with the field signal corresponding to the picture image.

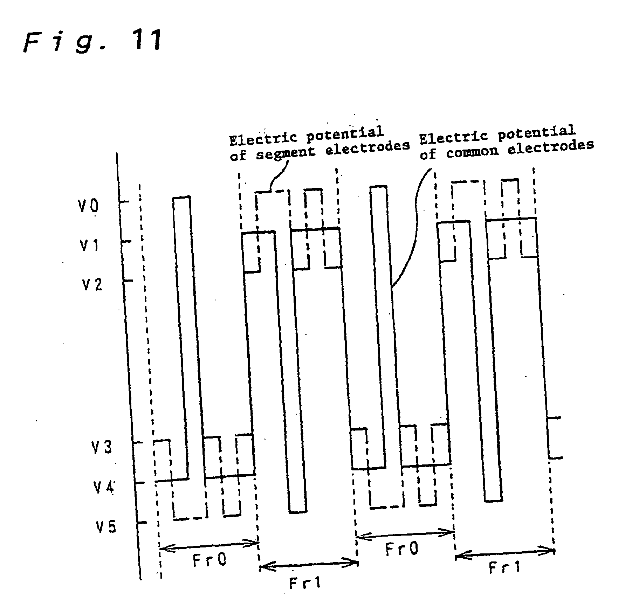

The voltage levels necessary when the liquid crystal panel is time division driven with high duty by the voltage averaging method are generally as shown in Fig. 11, and are the output electric potentials V0 to V5 having the relationships

$$V0 - V1 = V1 - V2 = V2 - V3 = V3 - V4 = V4 - V5 \qquad (1)$$

(here, V0 > V1 > V2 > V3 > V4 > V5).

The signals which are applied to the segment electrodes SEn and the common electrodes CEn are, for example, as shown in Fig. 11. In Fig. 11, the signal electric potential which is applied to the segment electrodes SEn and is indicated by the dashed lines switches to either V3 or V5 within the interval of frame 0 (hereafter called Fr0) shown in Fig. 11, and in addition, switches to either V0 or V2 in the interval of frame 1 (hereafter called Fr1) shown in Fig. 11. For example, the signal electric potential V0 corresponds to the on state of the corresponding pixel, and the signal electric potential V2 corresponds to the off state. The switching state between the electric potential levels of the segment electrodes SEn changes depending on the pattern displayed.

On the other hand, the signal electric potential applied to the common electrodes CEn is normally the non-selective state of V4 in the interval of Fr0, and becomes the selective state of V0 for only a specific interval. In addition, in the interval of Fr1, the electric potential is normally the non-selective state of V1, and becomes the selective state of V5 for only a specific interval. The interval over which the common electrodes CEn assume the selective state differs for each common electrode, and in general, the plurality of common electrodes CEn do not assume the selective state simultaneously.

The intervals of Fr0 and Fr1 shown in Fig. 11 alternatingly repeat, and through this the liquid crystal layer in the pixel areas undergoes alternating current driving, thereby preventing deterioration of the liquid crystal layer.

When the electric potential level of these kinds of segment electrodes SEn and common electrodes CEn switches, the capacitance (composed of the segment electrode, the common electrode and the liquid crystal layer interposed therebetween) of the pixels which exist in plurality in the liquid crystal panel is charged and discharged, and consequently, an electric current is created between each of the electric potential levels of the output electric potentials V0 through V5 of the power supply circuit through the liquid crystal panel. At this time, the switching of the electric potential level of the segment electrodes SEn is accomplished between V0 and V2, or between V3 and V5, and in addition, the majority of the common electrodes CEn are in a non-selective state, being the electric potential level of either V1 or V4. Accordingly, the electric current accompanying the switching of the electric potential levels of the segment electrodes SEn primarily flows between V0, V1 and V2, and between V3, V4 and V5. The common electrodes CEn are, as described above, for the most part in a non-selective state being the electric potential level of either V1 or V4, but this becomes the electric potential level of V0 or V5 in the selective state. Accordingly, the electric current accompanying switching of the electric potential levels of the common electrodes primarily flows between V0, V3, V4 and V5, and between V0, V1, V2 and V5.

The current which is generated in the power supply circuit when the liquid crystal panel 1 is driven using this type of electric current supply, that is to say the above-described power supply circuit, is supplied as a portion of the electric current which flows from the power source electric potential VDD to VEE. In other words, when considering, for example, the electric current which flows from the electric potential level V3 to V4 in the liquid crystal panel accompanying the switching of the electric potential levels of the segment electrodes SEn, this electric current flows initially out from the power source electric potential VDD, as shown in Fig. 10, and flows across the operational amplifier OP3 into the liquid crystal panel 1 at the electric potential level V3, returns to the electric potential level V4 from the liquid crystal panel 1 and flows finally to the power source electric potential VEE via the operational amplifier OP4. Accordingly, when the power supply circuit shown in Fig. 10 supplies an electric current which flows out from the output electric potential V3 to the liquid crystal panel 1 and returns to V4, the power consumption caused by the electric current that flows from the power source electric potential VDD to the output electric potential V3, and the power consumption caused by the electric current that flows from the output electric potential V4 to the power source electric potential VEE is only that of generating heat in the operational amplifiers OP3 and OP4, and there is no effective work with respect to the liquid crystal panel 1, so that there is wasted power consumption.

The electric current which is generated accompanying the switching of the electric potential levels of the segment electrodes SEn flows primarily between V0, V1 and V2, and between V3, V4 and V5, while the electric current which is generated accompanying the switching of electric potential levels of the common electrodes CEn flows primarily between V0, V3, V4 and V5, and between V0, V1, V2, and V5, and consequently, the former has a smaller voltage between each electric potential level than the latter. Accordingly, in contrasting the supplying of electric current accompanying the switching of the electric potential levels of the segment electrodes SEn and the supplying of electric current accompanying the switching of the electric potential levels of the common electrodes CEn using the power supply circuit of Fig. 10, the proportion of power which is consumed in the liquid crystal panel 1 is smaller in the former than in the latter with respect to the above-described wasted power consumption, and consequently, more power is wasted.

In recent years, demand for larger capacity and faster liquid crystal display panels has risen, and the shift to high duty in time-division driving of liquid crystal panels for this purpose has been dramatic. In order to increase the duty ratio during driving in this way, a larger voltage is necessary as the power source voltage and the electric potential difference between the high electric potential VDD and the low electric potential VEE expands, and consequently, the following problems are created in the conventional power supply circuit shown in Fig. 10.

(1) Because the above-described power source electric potentials VDD and VEE are used as the power source of the operational amplifiers, the power consumption which is caused by the operational amplifier idling current which flows steadily increases because of the expansion of the difference between these electric potentials.

(2) Because of the rise in power source voltage, it is necessary to use expensive, high breakdown-voltage operational amplifiers as the operational amplifiers in the power supply circuit.

(3) Because of the rise in power source voltage, the wasted amount of power which is consumed in the above-described power supply circuit, in particular the wasted power consumption which is created when the electric current accompanying switching of the electric potential levels of the segment electrodes SEn is supplied, increases.

JP-A-03-230117 discloses a power supply circuit according to the pre-characterizing portion of claim 1. Two voltage dividers each composed of series connection of a zener diode and a resistor are connected between the two potentials two provide two intermediate potentials. Each intermediate potential is applied, via a respective emitter follower, as one driving potential to a respective one of two output circuit units. A similar power supply circuit is disclosed in JP-A-04-294325. While the first mentioned one employs two voltage dividers to obtain two intermediate potentials, the latter mentioned circuit has one voltage divider composed of a series connection of a first resistor, two forward biased diodes and a second resistor.

It is an objective of the present invention to compose a power supply circuit which has low power consumption and moreover is an inexpensive power supply circuit, and in particular is suitable as the power supply for driving a liquid crystal display, and through utilizing such a power supply circuit, to reduce power consumption in the liquid crystal display device as a whole and to reduce production costs.

SUMMARY OF THE INVENTION

This objective is achieved with a power supply circuit as claimed in claim 1. Preferred embodiments of the invention are subject-matter of the dependent claims.

In accordance with the invention, it is possible for the electric potential difference between the two driving electric potentials which are supplied to the output circuit to be reduced more than the electric potential difference between a first electric potential and a second electric potential, and consequently, it is possible to reduce the voltage resistance of the circuit device of the output circuit, and also to reduce the power consumption via the output circuit. The reduction of voltage resistance in the circuit device causes the production costs of the power supply circuit to be reduced. In addition, a limiter circuit, which sets the upper limit electric potential and the lower limit electric potential of the intermediate electric potentials, is provided in accordance with the invention to limit the electric potential fluctuations of the intermediate electric potentials to a specific range. Because it is possible to reduce the amount of fluctuation in the intermediate electric potentials in this way, it is possible to control fluctuations in the driving voltage of the output circuit, and consequently, it is possible to obtain stable output properties.

It is preferable for the first electric potential and the intermediate electric potentials to be supplied as the driving electric potentials to a portion of the output circuit units, out of the plurality of output circuit units, and the intermediate electric potentials and the second electric potential to be supplied as the driving electric potentials to the rest of the output circuit units, out of the output circuit units. In this case, the first electric potential and the second electric potential are used as one of the driving electric potentials, and consequently, the number of intermediate electric potentials can be kept to a minimum.

In addition, it is preferable for an electric potential maintaining means to be provided on the intermediate electric potential forming unit in order to suppress fluctuations in the intermediate electric potentials. There are cases where the electric potential maintaining means has a capacitance which is connected between the intermediate electric potentials and the other electric potentials. By providing an electric potential maintaining means, fluctuations in the intermediate electric potentials can be controlled, and it is also possible to reduce the amplitude of the fluctuations in the driving voltage of the output circuit.

Furthermore, it is preferable for the intermediate electric potential forming unit to be a voltage divider which forms the intermediate electric potentials on the basis of the first electric potential and the second electric potential. This kind of voltage dividing circuit can be composed most easily, and a reliable voltage dividing function can be achieved.

In this voltage dividing circuit, there are cases where voltage divider resistances are provided, or where a zener diode is provided, or where one or a plurality of forward biased diodes are provided, as at least a portion of the voltage dividing means in the voltage dividing circuit.

It is desirable for the limiter circuit to be provided with a first activity device which sets the upper limit electric potential of the intermediate electric potentials, and a second activity device which sets the lower limit electric potential of the intermediate electric potentials. In this case, it is possible to reduce the power consumption while securing stable output circuit actions because the intermediate electric potentials are controlled in accordance with conditions by the activity device.

Furthermore, there are cases where the output circuit unit is a circuit unit primarily composed of a voltage follower comprised of operational amplifiers into which are input electric potentials which are formed by dividing voltages on the basis of the first electric potential and the second electric potential. In this case, it is possible to reduce the driving voltage of the operational amplifiers even if the electric potential difference between the first electric potential and the second electric potential is large, and consequently, it is possible to use inexpensive operational amplifiers with low voltage resistance, and it is also possible to reduce the amount of power which is consumed in the operational amplifiers.

It is very desirable for each of the above-described power supply circuits to be used as a power supply for driving a liquid crystal display. By utilizing the power supply circuit having the above-described structure, which can output in a stable manner a plurality of output electric potentials, as the power supply for driving a liquid crystal display, it is possible to reduce power consumption and reduce production costs.

In addition, it is very preferable to equip a liquid crystal display device with this power supply, and in this case also, it is possible to reduce wasted power consumption in the liquid crystal display device as a whole and to reduce production costs.

BRIEF DESCRIPTION OF THE DRAWINGS

Fig. 1     is a schematic circuit diagram showing the composition of a power supply circuit used for driving a liquid crystal display according to examples 1 and 2 ;

Fig. 2     is a graph showing the relationship between the intermediate electric potential Va and the frame interval when examples 1 and 2 are used in driving a liquid crystal display;

Fig. 3     is a schematic circuit diagram showing the composition of a power supply circuit used for driving a liquid crystal display according to an example 3 of the present invention;

Fig. 4     is a graph showing the relationship between the intermediate electric potentials Va and Va' and the frame interval when example 3 is used in driving a liquid crystal display;

Fig. 5     is a schematic circuit diagram showing the composition of a power supply circuit used for driving a liquid crystal display according to a preferred embodiment 1 of the present invention;

Fig. 6     is a graph showing the relationship between the intermediate electric potential Va and the frame interval when embodiment 1 is used in driving a liquid crystal display;

Fig. 7     is a schematic circuit diagram showing the composition of a power supply circuit used for driving a liquid crystal display according to a preferred embodiment 2 of the present invention;

Fig. 8     is a graph showing the relationship between the intermediate electric potential Va and the frame interval when embodiment 2 is used in driving a liquid crystal display;

Fig. 9     is a schematic composition diagram showing the state when the power supply circuit of each of the above-described embodiments is connected to a liquid crystal panel;

Fig. 10    is a schematic circuit diagram showing the composition of one type of conventional liquid crystal display device, and in particular a portion of its power supply circuit; and

Fig. 11    is a graph showing the driving electric potential of a liquid crystal display device.

DETAILED DESCRIPTION OF PREFERRED EMBODIMENTS

Before embodiments of the invention are described examples of power supply circuits will be described which include elements that are also included in the embodiments of the present invention described thereafter. The power supply circuits are particularly useful in a power supply for driving a liquid crystal and an embodiment of a liquid crystal display device using it, will be described with reference to the attached drawings in order to explain the present invention in greater detail. The present invention is not limited to a power supply circuit which is used as the power supply for driving a liquid crystal display, and can be applied widely as the composition of various power supply circuits which have a plurality of output electric potentials, but in the following, applications to a power supply for driving a liquid crystal and in a liquid crystal display device will be described.

Example 1

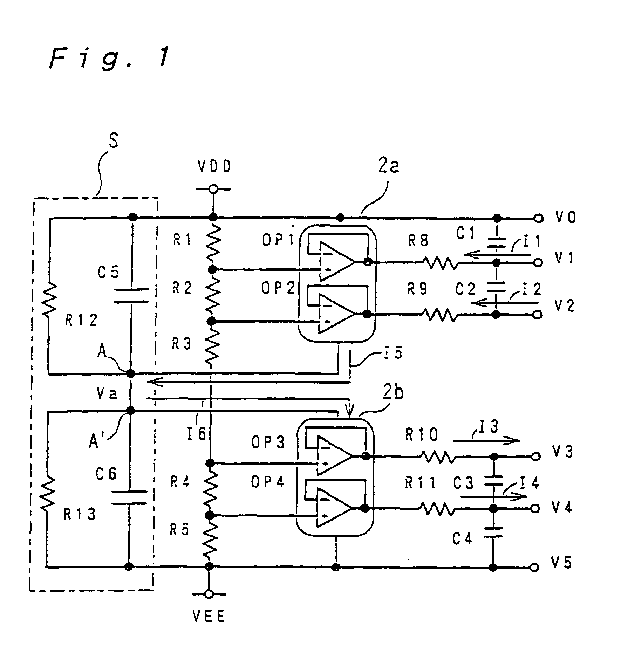

Figure 1 shows the circuit composition of a power supply circuit of example 1 for use in driving a liquid crystal display. In Fig. 1, the power source electric potentials VDD and VEE (with VDD > VEE) are supplied from an external power source (not shown), and resistors R1, R2, R3, R4 and R5 are connected in series between these power source electric potentials VDD and VEE to divide the voltage, so that intermediate electric potentials V1, V2, V3 and V4 are created. The output impedance is reduced by supplying these intermediate electric potentials through voltage followers which are comprised of operational amplifiers OP1, OP2, OP3 and OP4.

The outputs of operational amplifiers OP1, OP2, OP3 and OP4 are output via resistors R8, R9, R10 and R11 which are used to limit the output current of the operational amplifiers, and the output electric potentials V1, V2, V3 and V4, along with the power source electric potentials VDD=V0 and VEE=V5, are supplied to the driving circuit of a liquid crystal panel (not shown). Here, smoothing capacitors C1, C2, C3 and C4 are respectively connected between the output electric potentials V0 and V1, V1 and V2, V3 and V4 and V4 and V5.

Between the power source electric potentials VDD and VEE, a voltage dividing circuit S is connected in parallel with the circuit composed of the above-described voltage dividing resistors R1, R2, R3, R4 and R5. In this voltage dividing circuit S, a part wherein a high resistance resistor R12 and a capacitor C5 are connected in parallel, and a part where a high resistance resistor R13 and a capacitor C6 are connected in parallel, are connected in series, and the intermediate electric potential Va is taken from the intermediate points A and A' which are these connecting points.

Because R12 = R13 in the present example, this intermediate electric potential Va is set to the value

$$Va = (VDD + VEE) / 2 = Vo \tag{2}$$

under normal conditions.

To a circuit part 2a having the above-described operational amplifiers OP1 and OP2, the power source electric potential VDD and the intermediate electric potential Va are supplied as operation electric potentials which cause the operational amplifiers to operate, and in addition, to the circuit part 2b having the above-described operational amplifiers OP3 and OP4, the intermediate electric potential Va and the power source electric potential VEE are supplied as operation electric potentials.

In the above-described example, the idling electric currents of the operational amplifiers OP1 through OP4 exist as the steady electric currents which flow through the power supply circuit during non-driving times when the liquid crystal panel is not active. In this case, these idling electric currents are substantially balanced because operational amplifiers having the same rating are used as the operational amplifiers OP1 through OP4, so theoretically, the intermediate electric potential Va of the intermediate points A and A' should be stable at the value given by the above equation (2). However, in actuality, there are variances in the properties even in operational amplifiers having the same rating as described above, so that some imbalance in the idling electric currents exists. In addition, there is also an imbalance in the ineffective electric currents that flow outside the liquid crystal layer, for example in the liquid crystal driving circuit. Accordingly, in order to make the intermediate electric potential Va stable during non-driving of the liquid crystal panel, it is necessary to clamp the intermediate electric potential Va by setting the resistance values of resistors R12 and R13 high.

On the other hand, when the liquid crystal panel is driven, a transient current flows because of the switching of the liquid crystal driving electric potentials applied to the segment electrodes SEn and the common electrodes CEn. This transient current is a portion of the current which flows from the high electric potential VDD to the low electric potential VEE similar to the case of the above-described conventional example. In the present example, the case wherein a charging current flows to the pixels of the liquid crystal panel because of the output electric potentials V1 and V2 and the case wherein a discharging current flows from the liquid crystal panel because of the output electric potentials V3 and V4 are the same as in the conventional example.

However, the points of difference between the present example and the conventional example lie in the fact that a current I5 flows to the intermediate point A via the operational amplifiers OP1 and OP2 when discharging currents I1 or I2 from the pixels of the liquid crystal panel are created which are absorbed by the operational amplifiers OP1 and OP2 via the resistors R8 and R9, and a current I6 flows from the intermediate point A' to the operational amplifiers OP3 and OP4 when charging currents I3 or I4 are created which flow from the operational amplifiers OP3 and OP4 to the pixels of the liquid crystal panel via the resistors R10 and R11.

The creation of this current I5 causes the intermediate electric potential Va to temporarily rise, and the creation of the current I6 causes the intermediate electric potential Va to temporarily drop. Accordingly, in either case the intermediate electric potential Va changes, and through this the operation voltage which causes the operational amplifiers OP1, OP2, OP3 and OP4 to operate fluctuates.

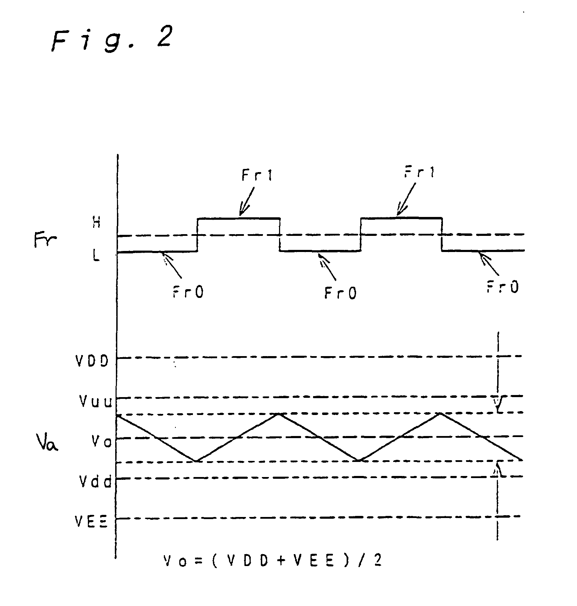

Figure 2 shows the state of fluctuations in the above-described intermediate electric potential Va. In the interval of Fr0, with the segment electrodes SEn in an off state and the common electrodes CEn in a non-selective state, the output electric potential V3 is supplied to the segment electrodes SEn of the liquid crystal panel, and the output electric potential V4 is supplied to the common electrodes CEn. On the other hand, in the interval of Fr1, with the segment electrodes SEn similarly in an off state and the common electrodes CEn in a non-selective state, the output electric potential V2 is supplied to the segment electrodes SEn and the output electric potential V1 is supplied to the common electrodes CEn.

Accordingly, in the interval of Fr0, the intermediate electric potential Va of the intermediate points A and A' drops because of charging currents I3 and I4 to the liquid crystal pixels which flow at the output electric potentials V3 and V4, and in the interval of Fr1, the intermediate electric potential Va rises because of the discharging currents I1 and I2 from the liquid crystal pixels which flow at the output electric potentials V1 and V2. In this case, because of alternating current driving through a driving voltage of opposite polarities in Fr0 and Fr1 which is to prevent deterioration of the liquid crystal, the time integral value (the moving charge quantity caused by the current) in the interval of Fr0 which is the discharging current I1 + I2 and the time integral value in the interval of Fr1 of the charging current I3 + I4 are substantially equal according to the relationships in above-described equations (1) and (2). Consequently, the intermediate electric potential Va such as is shown in Fig. 2 repeatedly fluctuates with a period in accordance with the frame interval with substantially equal rising and falling amounts centered about the value Vo = (VDD + VEE) /2.

In general, operational amplifiers do not produce output fluctuations even if the power source voltage fluctuates to some degree, if this fluctuation is within a prescribed range. This prescribed range depends on the properties of the operational amplifier. Accordingly, by keeping the electric potential fluctuations of the intermediate electric potential Va within this prescribed range, sure operations are possible as a power supply circuit.

With the present example, it is possible to cause operation similar to the conventional power supply circuit as described above, and it is possible to make the operation voltage of the operational amplifiers half that of the conventional example, and consequently, the effect is achieved that it is possible to use low voltage resistance, inexpensive devices as the operational amplifiers.

The fluctuation amplitude of the intermediate electric potential Va depends on each of the circuit constants in Fig. 1, and in particular, varies widely with the resistance of the resistors R12 and R13 and the capacitance of the capacitors C5 and C6. In addition, besides these circuit constants, the condition of the liquid crystal display which is being driven has a great influence. That is to say, the fluctuation amplitude of the intermediate electric potential Va depends on the structure of the liquid crystal panel module itself, the driving conditions of the liquid crystal, and the image pattern which is displayed on the liquid crystal panel.

Accordingly, the setting of the up-and-down fluctuation amplitude of the intermediate electric potential Va is accomplished by driving the liquid crystal panel with the worst display pattern (e.g., a pattern which displays a checkerboard on the entire screen, a pattern which displays horizontal stripes, or the like) which can be thought of as that which makes the above-described fluctuation amplitude a maximum, at the point in time when the module structure of the liquid crystal panel and the driving conditions have been determined, and adjusting the resistance of the resistors R12 and R13 and the capacitance of the capacitors C5 and C6 of Fig. 1 so that the fluctuation amplitude of the intermediate electric potential at this time does not deviate from the permissible operation voltage range of the operational amplifiers.

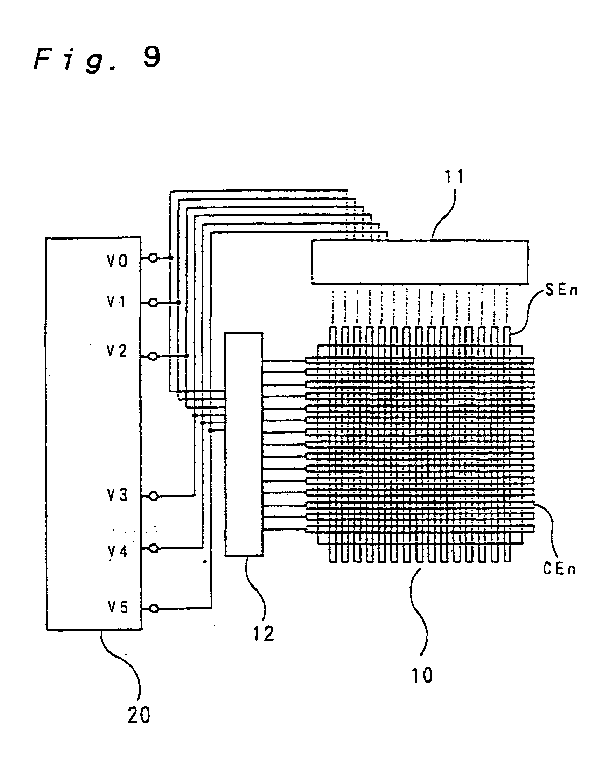

As shown in Fig. 9, a power supply circuit 20 having the above-described structure is connected to a liquid crystal display device in which are connected a segment electrode driving control circuit 11 and a common electrode driving control circuit 12 used to drive a liquid crystal panel 10 in which segment electrodes SEn and common electrodes CEn are formed. The liquid crystal panel 10 is a liquid crystal module with 0.33 mm pitch and 640 x 480 pixels, and time division driving is accomplished by the above-described segment electrode driving control circuit 11 and common electrode driving control circuit 12 under the conditions of 11240 duty, V-13V bias, and VDD-VEE = 28 V. The circuit constants are R1 = R2 = R4 = R5 = 10 kΩ, R3 = 90 kΩ, R8 = R9 = R10 = R11 = 4.7 Ω, C1 = C2 = C3 = C4 = 4.7 μF, R12 = R13 = 33 kΩ, and C5 = C6 = 2.2 μF.

With the results of experiments performed under the above-described conditions, the electric current consumption of the liquid crystal system was 6.93 mA with the conventional power supply circuit shown in Fig. 10, while in contrast to this, the electric current consumption was 4.26 mA with the present example, so that this value was reduced to around 65% of that of the conventional model. In addition, because the power loss of the operational amplifiers themselves was reduced, it became possible to secure derating with inexpensive operational amplifiers with relatively small maximum loss. That is to say, with the conventional structure, the power consumption under the worst conditions was 400 mW, but in the present example, it was possible to reduce this to 270 mW.

In the above-described example, a voltage-dividing circuit S was provided which is equipped, in addition to resistors R12 and R13, with capacitors C5 and C6 in order to obtain stability with respect to the power source voltages VDD and VEE which are supplied from the external power source, in order to form the intermediate electric potential Va, but it is possible to use a circuit structure which does not include capacitors in this voltage dividing circuit S, and in addition, it is also possible to use a circuit structure in which only one of the capacitors C5 and C6 is provided.

Example 2

Next, a second example will be described in which a liquid crystal display device is formed by connecting a power supply circuit having the same composition as in the above-described first example to a different liquid crystal panel. In this example, a liquid crystal panel 10 with 0.24 mm pitch and provided with 640 x 480 pixels is used as the liquid crystal panel 10 shown in Fig. 9, and time division driving is accomplished under the conditions of 1/480 duty, V-22V bias, and VDD - VEE = 35 V. The circuit constants of the power supply circuit this time were R3 = 180 k$\Omega$, but other than this were all set to the same values as in the above-described first example.

In this example, favorable results were obtained in that the certainty of the operations were secured the same as in the above-described example 1, and it was possible to reduce power consumption. As for the operational amplifiers OP1 through OP4, it was necessary to use operational amplifiers with the characteristic of 40 V voltage resistance when driving the conventional power supply circuit under the same conditions as in the present example, but in the present example, it was possible to use general inexpensive operational amplifiers with 30 V voltage resistance.

Example 3

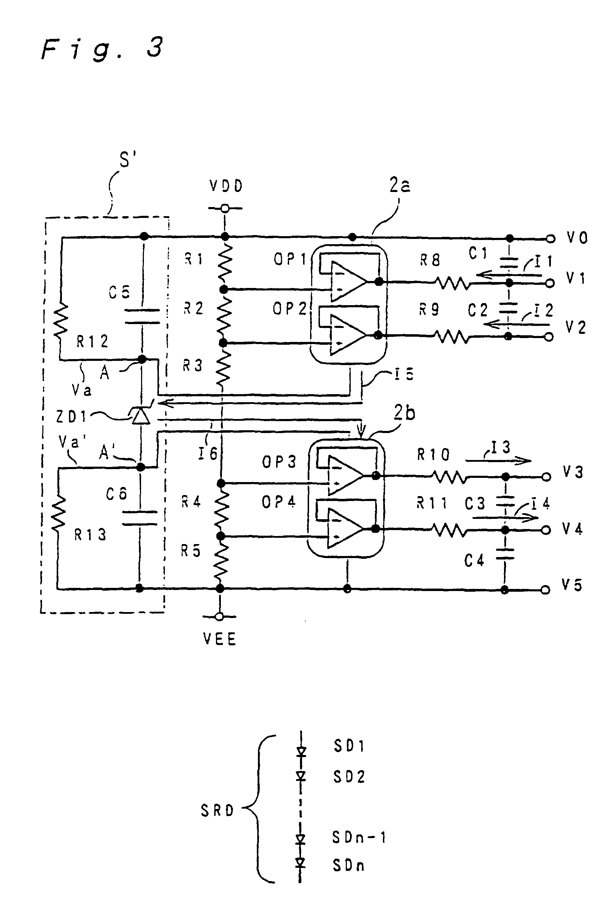

Figure 3 shows the composition of a third example of the power supply circuit. In this example, everything is the same as in the first and second examples with the exception of the internal composition of the voltage dividing circuit S'. The voltage dividing circuit S' in this example has a zener diode ZD1 connected between the intermediate point A and the intermediate point A'. Because of the presence of this zener diode ZD1, a constant electric potential difference corresponding to the zener voltage Vz is created between the intermediate electric potential Va of the intermediate point A and the intermediate electric potential Va' of the intermediate point A', and consequently, the sum of the operation voltage VDD - Va which is supplied to the operational amplifiers OP1 and OP2 and the operation voltage Va' - VEE which is supplied to the operational amplifiers OP3 and OP4 is reduced by a specific electric potential difference Vz from the power source voltage VDD - VEE.

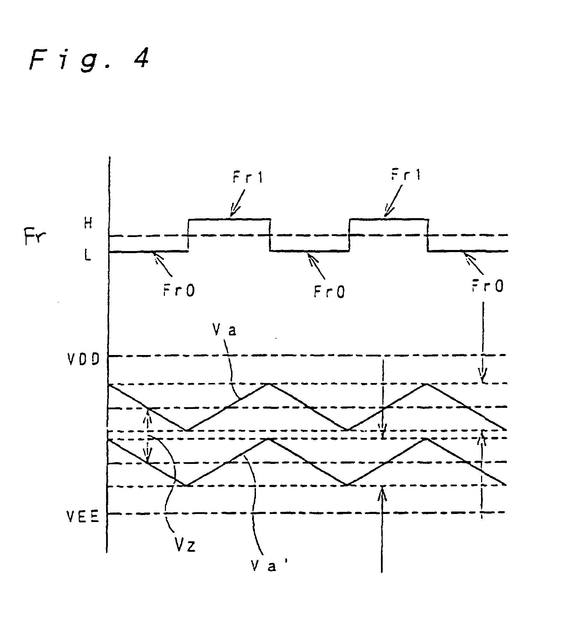

Thus, as shown in Fig. 4, the intermediate electric potentials Va and Va' fluctuate up and down in synchronous with the frame period similar to the intermediate electric potential of the first example. The amplitude of these fluctuations is set in accordance with the rating on the operational amplifiers similar to the above-described first example. The electric potential difference between the intermediate electric potentials Va and Va' is always substantially constant.

In this example, it Is possible to reduce further the operation voltage which is applied to the operational amplifiers OP1 through OP4 more than in the above-described first and second examples, and it is also possible to reduce further the limits of the operational amplifiers with respect to the permissible loss and the maximum rating. In this example, the power loss of the power supply circuit as a whole is substantially equal to that of the first example.

In the voltage dividing circuit S', it is possible to use, for example, the series circuit SRD in which a plurality of diodes SD1, SD2, ..., SDn-1, SDn are connected, as shown in the lower portion of Fig. 3, as an insertion circuit inserted between the intermediate points A and A'. The number of connected diodes can be set appropriately in accordance with the required electric potential difference. In this case, the electric potential difference between the intermediate points A and A' is a value that is always substantially constant, being the sum of the forward voltage of each diode.

In addition, as the above-described insertion circuit, it is possible to use a circuit which causes a resultant electric potential difference between the intermediate electric potentials Va and Va' such as a simple resistor or capacitor or the like, and this electric potential difference need not be constant if the operation voltage of the operational amplifiers is kept within a permissible range.

Embodiment 1

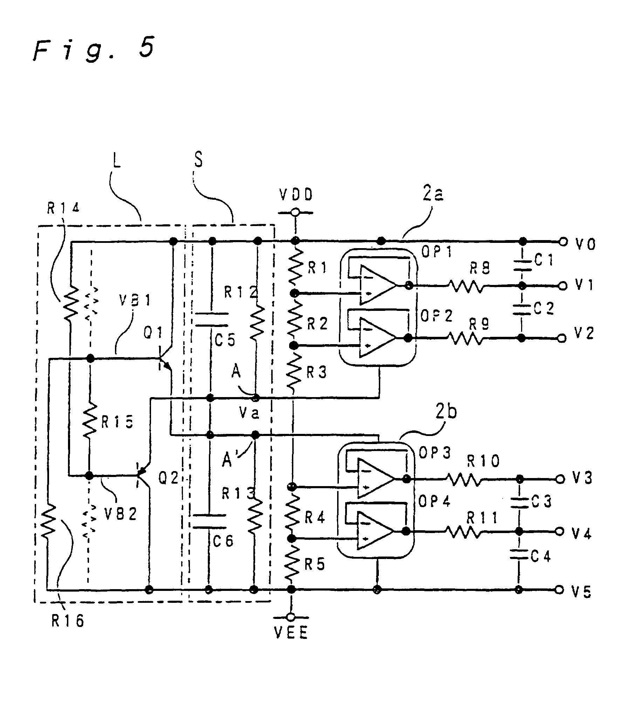

Next, the first embodiment of the present invention will be described with reference to Fig. 5. In this embodiment, a limiter circuit L is provided in addition to the circuits of the above-described first and second examples. This limiter circuit L has the collector terminal and the emitter terminal of an npn-type transistor Q1 connected between the power source electric potential VDD and the intermediate point A', and the collector terminal and emitter terminal of a pnp-type transistor Q2 connected between the intermediate point A and the power source electric potential VEE. It is not necessary to distinguish these intermediate points A and A' when they have the same electric potential Va, as in the present embodiment, but a connection structure similar to that described above can be used to handle cases such as in the above-described third example wherein a electric potential difference is formed between the intermediate points A and A'.

The base terminal of the transistor Q1 is connected to the power source electric potential VEE via a resistor R16, and the base terminal of the transistor Q2 is connected to the power source electric potential VDD via a resistor R14. In addition, a resistor R15 is connected between the base terminal of the transistor Q1 and the base terminal of the transistor Q2.

Because a limiter circuit L having this kind of circuit composition is provided, when the intermediate electric potential Va of the intermediate points A and A' tries to drop below the lower limit electric potential Vd which is determined by the properties of the transistors Q1 and Q2 and the resistances of the resistors R14, R15, and R16, the transistor Q1 is turned on and current flows from the power source electric potential VDD to the intermediate point A', and consequently, the intermediate electric potential Va is always held not less than the lower limit electric potential Vd. On the other hand, when the intermediate electric potential Va tries to exceed the upper limit electric potential Vu which is similarly set, the transistor Q2 is turned on and current flows from the intermediate point A to the power source electric potential VEE, and consequently, the intermediate electric potential Va is always held not greater than the upper limit electric potential Vu.

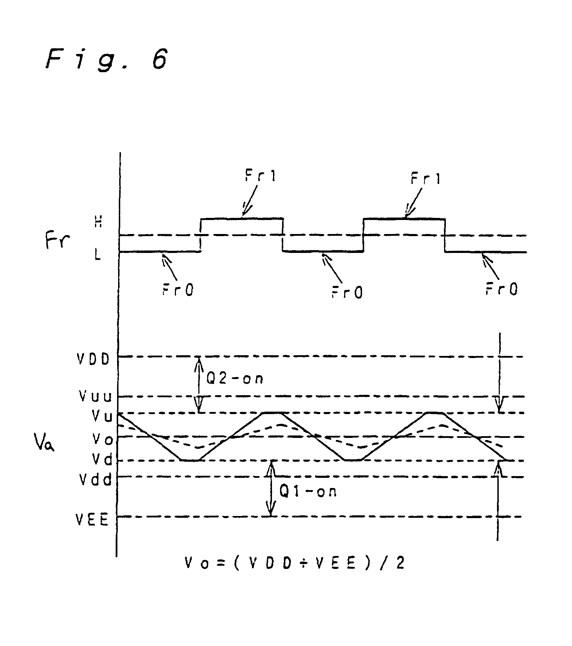

Figure 6 shows the intermediate electric potential Va which is held between the upper limit electric potential Vu and the lower limit electric potential Vd as described above. In the present embodiment, it is possible to limit the fluctuations of the intermediate electric potential Va to within a specific upper limit electric potential Vu and lower limit electric potential Vd by means of the limiter circuit L, and consequently, it is possible to obtain stable output voltages by setting the operation voltage range, which is determined by the upper limit electric potential Vu and the lower limit electric potential Vd, within the permissible operation voltage range of the operational amplifiers OP1 to OP4.

In this case, the fluctuations in the intermediate electric potential Va are forcibly limited to within a prescribed range by the limiter circuit L, and consequently, the benefit is achieved that the circuit constants of the power supply circuit can be set without consideration to the fluctuation properties of the intermediate electric potential Va.

In other words, in the above-described first through third embodiments, when the resistances of the resistors R12 and R13 are increased, for example, there is a concern that the fluctuation amplitude of the intermediate electric potential Va will become large and will exceed the permissible operation voltage range of the operational amplifiers, while conversely, when the resistances of the resistors R12 and R13 are made smaller in order to reduce the fluctuation amplitude of the intermediate electric potential Va, the steady current that flows between the power source electric potentials VDD and VEE increases, and the power consumption of the circuit as a whole increases, thereby creating a dilemma. However, in the present embodiment, it is not necessary to worry about the fluctuation amplitude of the intermediate electric potential Va in the state without the limiter circuit L, and consequently, it is possible to set the resistances of the resistors R12 and R13 high, making it possible to reduce the steady current that flows through these resistors and thereby making it possible to further reduce power consumption in the circuit.

In the present embodiment, it is in actuality possible to set the resistances of the resistors R12 and R13, which were 33 kΩ in the above-described first and second embodiments, to 200 kΩ. At this time, when the normal display pattern is caused to be displayed on the liquid crystal panel screen, the electric potential fluctuation amplitude of the intermediate electric potential Va is small, as indicated by the dashed line in Fig. 6, and is kept within the permissible operation voltage range Vuu to Vdd of the operational amplifiers OP1 to OP4. However, when the picture image that is displayed on the liquid crystal panel becomes the worst pattern that consumes more power, the fluctuation amplitude of the intermediate electric potential Va becomes larger and approaches the limits of the permissible operation range of the operational amplifiers or exceeds this range, because the resistances of the resistors R12 and R13 are large. Because the intermediate electric potential Va is limited by the limiter circuit L so that the upper limit electric potential Vu < Vuu and the lower limit electric potential Vd > Vdd, it is possible for the operational amplifiers OP1 to OP4 to continue stable operation without hindrance.

The limiter circuit L is such that the action points of the transistors Q1 and Q2 can be adjusted by the resistors R14, R15 and R16, and calling VBQ1 the base electric potential of the transistor Q1 which is set in this way, and VBQ2 the base electric potential of the transistor Q2, the condition for the transistor Q1 to be in an on state is

$$Va \leq VBQ1 - VBE1 = Vd \tag{3}$$

and the condition for the transistor Q2 to be in an on state is

$$Va \geq VBQ2 + VBE2 = Vu \tag{4}$$

VBE1 is the base-emitter voltage of the transistor Q1, and VBE2 is the base-emitter voltage of the transistor Q2, and in a transistor with a normal silicon pn junction, these voltages are on the order of 0.7 V.

In addition, the limiter circuit is not restricted to the above-described configuration, for it is possible to use various commonly known limiter circuits. For example, it is also possible to cause a circuit configuration in which the two resistors indicated by the dashed lines inside the limiter circuit L of Fig. 5 are connected in place of the resistors R14 and R16 to function similarly. Or, it is possible to configure the circuit by connecting zener diodes in place of the transistors Q1 and Q2, and to limit the electric potential difference between the power source electric potential VDD and the intermediate electric potential Va, and the electric potential difference between the intermediate electric potential Va and the power source electric potential VEE, to not greater than the respective zener voltages.

Embodiment 2

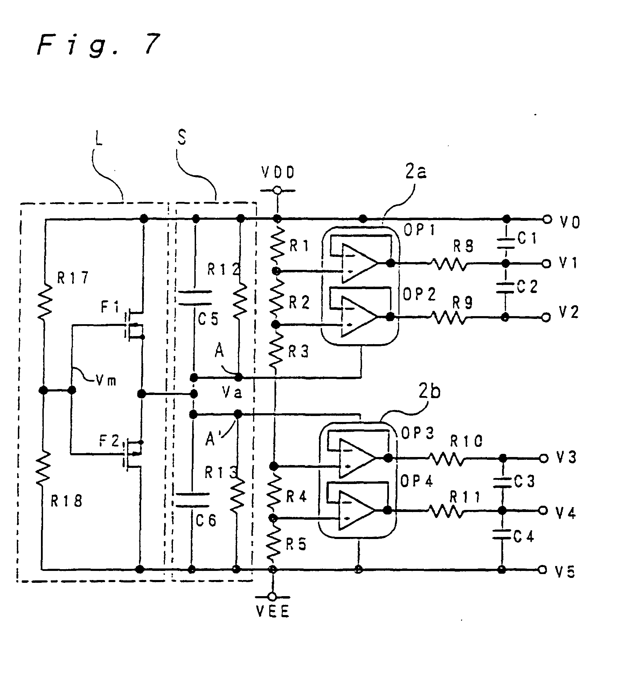

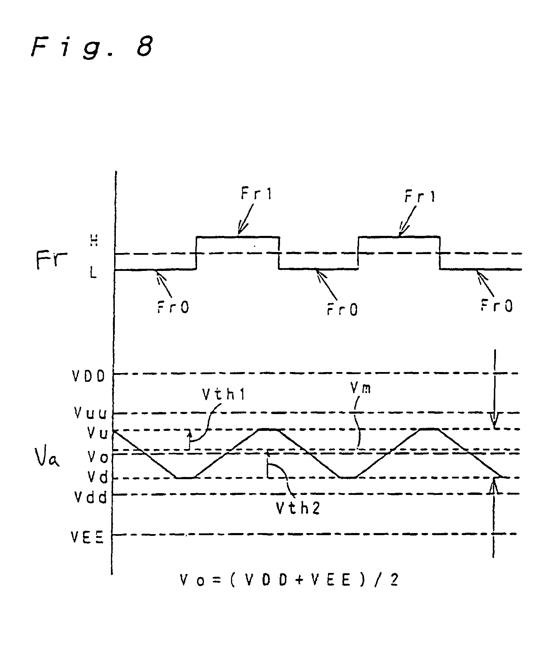

Next, a second embodiment of the present invention will be described with reference to Fig. 7. In this embodiment, only the configuration of the limiter circuit L' differs from the above-described first embodiment. In this limiter circuit L', a field effect transistor (FET) F1 is connected between the power source electric potential VDD and the intermediate electric potential Va, and a field effect transistor F2 is connected between the intermediate electric potential Va and the power source electric potential VEE. In addition, the gate electric potential Vm of these field effect transistors F1 and F2 is set by a voltage dividing circuit comprised of high resistance resistors R17 and R18.
In this embodiment, the up and down fluctuations of the intermediate electric potential Va are limited as shown in Fig. 8, similar to the above-described first embodiment. That is to say, when the intermediate electric potential Va drops and

$$Va \leq Vm - Vth1 = Vd \tag{5},$$

the field effect transistor F1 is turned on, current flows from the power source electric potential VDD to the intermediate electric potential Va, and the electric potential drop of the intermediate electric potential Va is limited.
In addition, when the intermediate electric potential Va rises and

$$Va \geq Vm + Vth2 = Vu \tag{6},$$

the field effect transistor F2 is turned on, current flows from the intermediate electric potential Va to the power source electric potential VEE, and the electric potential rise in the intermediate electric potential Va is limited.

**Claims**

1.   A power supply circuit, comprising a plurality of output circuit units which supply a plurality of output electric potentials (V0-V2, V3-V5) on the basis of a first electric potential (V0) and a second electric potential (VEE) which differs from this first electric potential; and an intermediate electric potential forming unit (S) which forms one or more intermediate electric potentials (Va) between the first electric potential and the second electric potential; wherein one of the electric potentials out of the first electric potential, the second electric potential and the intermediate electric potentials and an intermediate electric potential which differs from this electric potential, are supplied as the driving electric potentials to the output circuit units,
      **characterized by** a limiter circuit (L) that sets the upper limit electric potential and the lower limit electric potential of the one or more intermediate electric potentials.

2.   The power supply circuit of claim 1, wherein the first electric potential (VDD) and one (Va) of said one or more intermediate electric potentials are supplied as the driving electric potentials to a portion (2a) of the output circuit units out of the plurality of output circuit units, and one (Va) of said one or more intermediate electric potentials and the second electric potential (VEE) are supplied as the driving electric potentials to the rest (2b) of the output circuit units, out of the output circuit units.

3.   The power supply circuit of claim 1, wherein an electric potential maintaining means (C5, C6) is provided in the intermediate electric potential forming unit (S) in order to suppress fluctuations in the one or more intermediate electric potentials.

4.   The power supply circuit of claim 3, wherein the electric potential maintaining means comprises a capacitor (C5; C6) which is connected between one of the intermediate electric potentials (Va) and one of the other electric potentials (VDD, VEE).

5. The power supply circuit of claim 1, wherein the intermediate electric potential forming unit (S) is a voltage divider (R12, R13) which forms the one or more intermediate electric potentials on the basis of the first electric potential (VDD) and the second electric potential (VEE).

6. The power supply circuit of claim 5, wherein voltage divider resistors (R12, R13) are provided as at least a portion of the voltage dividing means in the voltage divider.

7. The power supply circuit of claim 5, wherein a zener diode (ZD1) is provided as at least a portion of the voltage dividing means in the voltage divider.

8. The power supply circuit of claim 5, wherein one or more forward biased diodes are provided as at least a portion of the voltage dividing means in the voltage dividing circuit.

9. The power supply circuit of claim 1, wherein the limiter circuit (L) is provided with a first transistor (Q1) which sets the upper limit electric potential of the intermediate electric potentials, and a second transistor which sets the lower limit electric potential of the intermediate electric potentials.

10. The power supply circuit of claim 9, wherein the first and second transistors are bipolar transistors (Q1, Q2) each connected as an emitter follower.

11. The power supply circuit of claim 9, wherein the first and second transistors are FETs (F1, F2) each connected as a source follower.

12. The power supply circuit of claim 11, wherein each output circuit unit (2a, 2b) is a circuit unit primarily composed of a voltage follower comprised of operational amplifiers into which are input electric potentials which are formed by dividing voltages on the basis of the first electric potential (VDD) and the second electric potential (VEE).

13. A liquid crystal display driving power supply equipped with the power supply circuit of any of claims 1 through 12.

14. A liquid crystal display device equipped with the liquid crystal display driving power supply of claim 13.

**Patentansprüche**

1. Energieversorgungsschaltung mit einer Mehrzahl von Ausgangsschaltungseinheiten, die eine Mehrzahl von elektrischen Ausgangspotentialen (V0-V2, V3-V5) auf der Grundlage eines ersten elektrischen Potentials (V0) und eines zweiten elektrischen Potentials (VEE) liefern, das von diesem ersten elektrischen Potential abweicht, und einer Intermediärelektropotentialerzeugungseinheit (S), die ein oder mehrere intermediäre elektrische Potentiale (Va) zwischen dem ersten elektrischen Potential und dem zweiten elektrischen Potential erzeugt; wobei eines der elektrischen Potentiale unter dem elektrischen Potential, dem zweiten elektrischen Potential und den intermediären elektrischen Potentialen sowie ein sich von diesem elektrischen Potential unterscheidendes intermediäres elektrisches Potential als elektrische Treiberpotentiale an die Ausgangsschaltungseinheiten geliefert werden,

   **gekennzeichnet durch** eine Begrenzerschaltung (L), die das obere elektrische Grenzpotential und das untere elektrische Grenzpotential der ein oder mehreren intermediären elektrischen Potentiale festlegt.

2. Energieversorgungsschaltung nach Anspruch 1, bei der das erste elektrische Potential (VDD) und eines (Va) der ein oder mehreren intermediären elektrischen Potentiale als elektrische Treiberpotentiale einem Teil (2a) der Ausgangsschaltungseinheiten aus der Mehrzahl von Ausgangsschaltungseinheiten zugeführt werden, und eines (Va) der ein oder mehreren intermediären elektrischen Potentiale und das zweite elektrische Potential (VEE) als elektrische Treiberpotentiale den restlichen Ausgangsschaltungseinheiten (2b) unter den Ausgangsschaltungseinheiten zugeführt werden.

3. Energieversorgungsschaltung nach Anspruch 1, bei der ein elektrisches Potentialhaltemittel (C5, C6) in der Intermediärelektropotentialerzeugungseinheit (S) vorgesehen ist, um Schwankungen in den ein oder mehreren elektrischen Potentialen zu unterdrücken.

4. Energieversorgungsschaltung nach Anspruch 3, bei der das elektrische Potentialhaltemittel einen Kondensator (C5; C6) umfasst, der zwischen eines der intermediären elektrischen Potentiale (Va) und eines der anderen elektrischen Potentiale (VDD, VEE) geschaltet ist.

5. Energieversorgungsschaltung nach Anspruch 1, bei der die Intermediärelektropotentialerzeugungseinheit (S) ein Spannungsteiler (R12, R13) ist, der die ein oder mehreren intermediären elektrischen Potentiale auf der Grundlage des ersten elektrischen Potentials (VDD) und des zweiten elektrischen Potentials (VEE) erzeugt.

6. Energieversorgungsschaltung nach Anspruch 5, bei der Spannungsteilerwiderstände (R12, R13) als wenigstens ein Teil der Spannungsteilermittel in dem Spannungsteiler vorgesehen sind.

7. Energieversorgungsschaltung nach Anspruch 5, bei der eine Zenerdiode (ZD1) als wenigstens ein Teil der Spannungsteilermittel in dem Spannungsteiler vorgesehen ist.

8. Energieversorgungsschaltung nach Anspruch 5, bei der ein oder mehrere in Durchlassrichtung gepolte Dioden als wenigstens ein Teil der Spannungsteilermittel in der Spannungsteilerschaltung vorgesehen sind.

9. Energieversorgungsschaltung nach Anspruch 1, bei der die Begrenzerschaltung (L) mit einem ersten Transistor (Q1), der das obere elektrische Grenzpotential der intermediären elektrischen Potentiale festlegt, und einem zweiten Transistor, der das untere elektrische Grenzpotential der intermediären elektrischen Potentiale festlegt, ausgestattet ist.

10. Energieversorgungsschaltung nach Anspruch 9, bei der der erste und der zweite Transistor jeweils als Emitterfolger geschaltete bipolare Transistoren (Q1, Q2) sind.

11. Energieversorgungsschaltung nach Anspruch 9, bei der der erste und zweite Transistor jeweils als Sourcefolger geschaltete FETs (F1, F2) sind.

12. Energieversorgungsschaltung nach Anspruch 11, bei der jede Ausgangsschaltungseinheit (2a, 2b) eine Schaltungseinheit ist, die primär aus einem Spannungsfolger aufgebaut ist, der Operationsverstärker umfasst, in welche elektrische Potentiale eingegeben werden, die durch Teilen von Spannungen auf der Grundlage des ersten elektrischen Potentials (VDD) und des zweiten elektrischen Potentials (VEE) erzeugt werden.

13. Flüssigkristallanzeigetreiber-Energieversorgung, ausgestattet mit der Energieversorgungsschaltung nach einem der Ansprüche 1 bis 12.

14. Flüssigkristallanzeigevorrichtung, ausgestattet mit der Flüssigkristallanzeigetreiber-Energieversorgung nach Anspruch 13.

**Revendications**

1. Circuit d'alimentation comprenant une pluralité d'unités de circuits de sortie qui délivre une pluralité de potentiels électriques de sortie (V0 à V2, V3 à V5), sur la base d'un premier potentiel électrique (V0) et d'un deuxième potentiel électrique (VEE) qui diffère de ce premier potentiel électrique ; et une unité (S) de formation de potentiels électriques intermédiaires qui forme un ou plusieurs potentiels (Va) électriques intermédiaires entre le premier potentiel électrique et le deuxième potentiel électrique ; dans lequel l'un des potentiels électriques parmi le premier potentiel électrique, le deuxième potentiel électrique et les potentiels électriques intermédiaires, ainsi qu'un potentiel électrique intermédiaire qui diffère de ce potentiel électrique, sont fournis en tant que potentiels électriques de commande aux unités de circuits de sortie,
   **caractérisé par** un limiteur (L) qui fixe le potentiel électrique de limite supérieure et le potentiel électrique de limite inférieure du ou des potentiels électriques intermédiaires.

2. Circuit d'alimentation suivant la revendication 1, dans lequel le premier potentiel (VDD) électrique et l'un (Va) du ou des potentiels électriques intermédiaires sont fournis en tant que potentiels électriques de commande à une partie (2a) des unités de circuits de sortie parmi la pluralité des unités de circuits de sortie, et l'un (Va) du ou des potentiels électriques intermédiaires ainsi que le deuxième potentiel (VEE) électrique sont fournis en tant que potentiels électriques de commande au reste (2b) des unités de circuits de sortie parmi les unités de circuits de sortie.

3. Circuit d'alimentation suivant la revendication 1, dans lequel un moyen (C5, C6) de maintien de potentiel électrique est prévu dans l'unité (S) de formation de potentiels électriques intermédiaires, afin d'éliminer des fluctuations du ou des potentiels électriques intermédiaires.

4. Circuit d'alimentation suivant la revendication 3, dans lequel le moyen de maintien de potentiel électrique comprend un condensateur (C5, C6) qui est connecté entre l'un des potentiels (Va) électriques intermédiaires et l'un des autres potentiels (VDD, VEE) électriques.

5. Circuit d'alimentation suivant la revendication 1, dans lequel l'unité (S) de formation de potentiels électriques intermédiaires est un diviseur (R12, R13) de tension qui forme le ou les potentiels électriques intermédiaires, sur la base du premier potentiel (VDD) électrique et du deuxième potentiel (VEE) électrique.

6. Circuit d'alimentation suivant la revendication 5, dans lequel des résistances (R12, R13) de diviseur de tension sont prévues en tant que partie au moins du moyen de division de tension du diviseur de tension.

7. Circuit d'alimentation suivant la revendication 5, dans lequel on prévoit une diode (ZD1) Zener, en tant que partie au moins du moyen de division de tension du diviseur de tension.

8. Circuit d'alimentation suivant la revendication 5, dans lequel une ou plusieurs diodes polarisées dans le sens direct sont prévues en tant que partie au moins du moyen de division de tension du circuit de division de tension.

9. Circuit d'alimentation suivant la revendication 1, dans lequel le limiteur (L) est muni d'un premier transistor (Q1) qui fixe le potentiel électrique de limite supérieure des potentiels électriques intermédiaires, et d'un deuxième transistor qui fixe le potentiel électrique de limite inférieure des potentiels électriques intermédiaires.

10. Circuit d'alimentation suivant la revendication 9, dans lequel les premier et deuxième transistors sont des transistors (Q1, Q2) bipolaires montés chacun en tant qu'émetteur-suiveur.

11. Circuit d'alimentation suivant la revendication 9, dans lequel les premier et deuxième transistors sont des TEC (F1, F2) montés chacun en tant que source suiveuse.

12. Circuit d'alimentation suivant la revendication 11, dans lequel chaque unité (2a, 2b) de circuits de sortie est une unité de circuits principalement composée d'un suiveur de tension comprenant des amplificateurs opérationnels, auxquels sont appliqués des potentiels électriques que l'on forme en divisant des tensions, sur la base du premier potentiel (VDD) électrique et du deuxième potentiel (VEE) électrique.

13. Alimentation d'attaque d'afficheur à cristaux liquides, équipée du circuit d'alimentation suivant l'une quelconque des revendications 1 à 12.

14. Dispositif d'affichage à cristaux liquides, équipé de l'alimentation d'attaque d'afficheur à cristaux liquides suivant la revendication 13.

Fig. 1

# Fig. 2

$$Vo = (VDD + VEE) / 2$$

# Fig. 3

## Fig. 4

Fig. 5

## $F\ i\ g\ .\ 6$

$$V o = ( V D D \div V E E ) / 2$$

# Fig. 7

Fig. 8

$$V_o = (VDD + VEE) / 2$$

*Fig. 9*

# Fig. 10

# Fig. 11

Electric potential
of segment electrodes

Electric potential
of common electrodes

V 0

V 1

V 2

V 3

V 4

V 5

Fr0

Fr1

Fr0

Fr1